Europäisches Patentamt

European Patent Office

Office européen des brevets

(11) Numéro de publication: **0 115 478**
**A1**

## (12) DEMANDE DE BREVET EUROPEEN

(21) Numéro de dépôt: **84870007.6**

(22) Date de dépôt: **13.01.84**

(51) Int. Cl.³: **G 08 B 5/38**
**A 41 D 13/00, G 08 B 5/00**

(30) Priorité: **19.01.83 BE 209925**

(43) Date de publication de la demande:
**08.08.84 Bulletin 84/32**

(84) Etats contractants désignés:
**BE DE FR GB IT NL**

(71) Demandeur: **Jerome, Jacques**
**Chaussée d'Alsemberg, 243**
**B-1180 Bruxelles(BE)**

(72) Inventeur: **Jerome, Jacques**
**Chaussée d'Alsemberg, 243**
**B-1180 Bruxelles(BE)**

(74) Mandataire: **De Brabanter, Maurice et al,**
**Bureau VANDER HAEGHEN 63 Avenue de la Toison d'Or**
**B-1060 Bruxelles(BE)**

(54) **Vêtement de sécurité routière.**

(57) Un vêtement de sécurité routière, destiné à être porté par-dessus les autres vêtements et réalisé en matière imperméable garnie de motifs réfléchissants (27), comporte un dispositif électrique (8) de signalisation comprenant des feux (9). Ces feux (9) sont des feux de direction (9", 9'''), éventuellement clignotants et/ou des feux de position (9, 9') disposés derrière des fenêtres translucides (16) au voisinage des épaules. Les conducteurs (12) du circuit électrique (10) sont montés dans des gaines (13), ménagées le long des coutures latérales du vêtement (1).

FIG. 4

EP 0 115 478 A1

La présente invention est relative à un vêtement de sécurité routière, à porter par-dessus les autres vêtements, en matière éventuellement imperméable et muni éventuellement de motifs réfléchissants.

Elle trouve sa principale application en tant que vêtement de sports et de travail pour certains usagers de la route, afin d'améliorer leur sécurité, particulièrement après la tombée de la nuit, en signalant leur présence.

Le vêtement de sécurité routière suivant l'invention est recommandé à des usagers de tout âge, quel que soit le moyen de locomotion utilisé. Il peut s'agir de piétons, de cyclistes, de vélomotoristes et de cavaliers.

Le vêtement en question convient également aux agents de la circulation, aux mécaniciens chargés de dépanner un véhicule sur une chaussée, aux ouvriers effectuant des travaux sur la voie publique, aux amateurs de planches à roulettes et aux animaux domestiques et de trait, tels les chevaux et les chiens afin de mieux déceler leur présence dans l'obscurité.

On sait que nombre d'accidents de la circulation est dû à la mauvaise visibilité des piétons et cyclistes.

La présente invention vise à prévenir de tels accidents. Elle propose un vêtement de sécurité routière, visible de face et de dos, réalisé en matière éventuellement imperméable et muni éventuellement de motifs réfléchissants, essentiellement caractérisé en ce qu'il comporte un dispositif électrique de signalisation comprenant des feux et un circuit électrique reliant ceux-ci à des moyens de commande et à une source de courant.

Suivant une particularité de l'invention, les feux susdits sont des feux de direction éventuellement clignotants et commandés manuellement par l'usager à l'aide des moyens de commande susdits.

Le vêtement comporte avantageusement des feux de position, éventuellement complétéspar des feux de direction.

Dans une forme de réalisation spécifique, les moyens de commande sont constitués d'interrupteurs à bouton-poussoir. Ces interrupteurs sont éventuellement cachés par une poche à volet de manière à pouvoir être activés par une simple pression sur le volet.

D'autres particularités et détails de l'invention apparaîtront au cours de la description détaillée suivante, à l'aide des dessins ci-annexés, qui représentent schématiquement et à titre non limitatif, une forme de réalisation du vêtement de sécurité routière suivant l'invention.

Dans ces dessins :
- la figure 1 montre, en perspective, un vêtement suivant l'invention;
- la figure 2 montre de manière schématique, les composants d'un circuit électrique du dispositif d'éclairage du vêtement montré aux figures 1 à 3;
- la figure 3 montre un dispositif clignotant;
- les figures 4 et 5 sont des vues en plan des faces frontales et postérieures du vêtement montré à la figure 1;

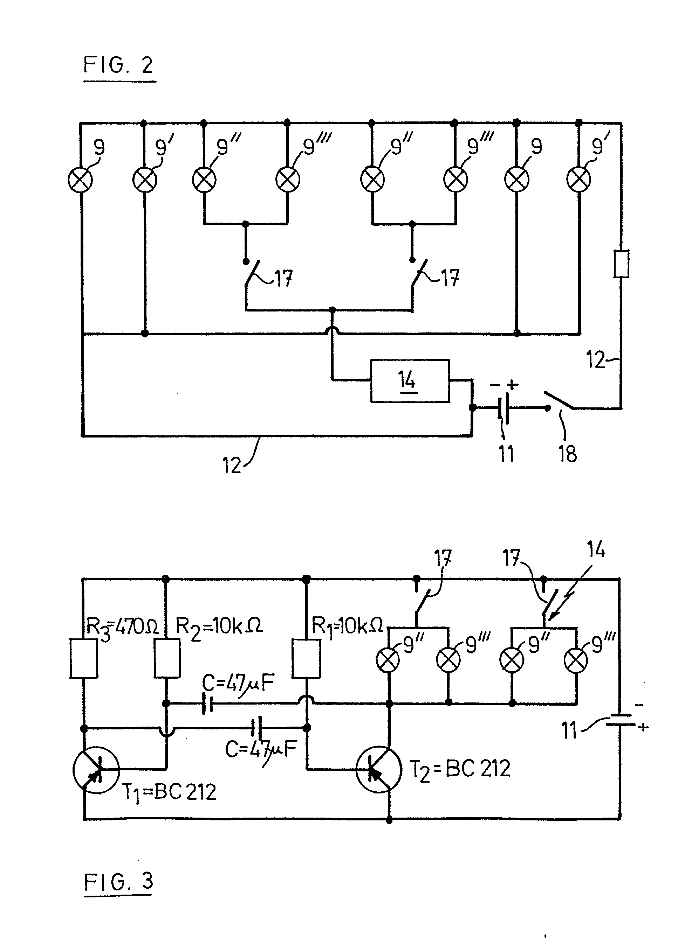

- les figures 6 et 7 montrent un vêtement et un collier pour chien.

Dans ces figures, les mêmes notations de référence désignent des éléments identiques ou analogues.

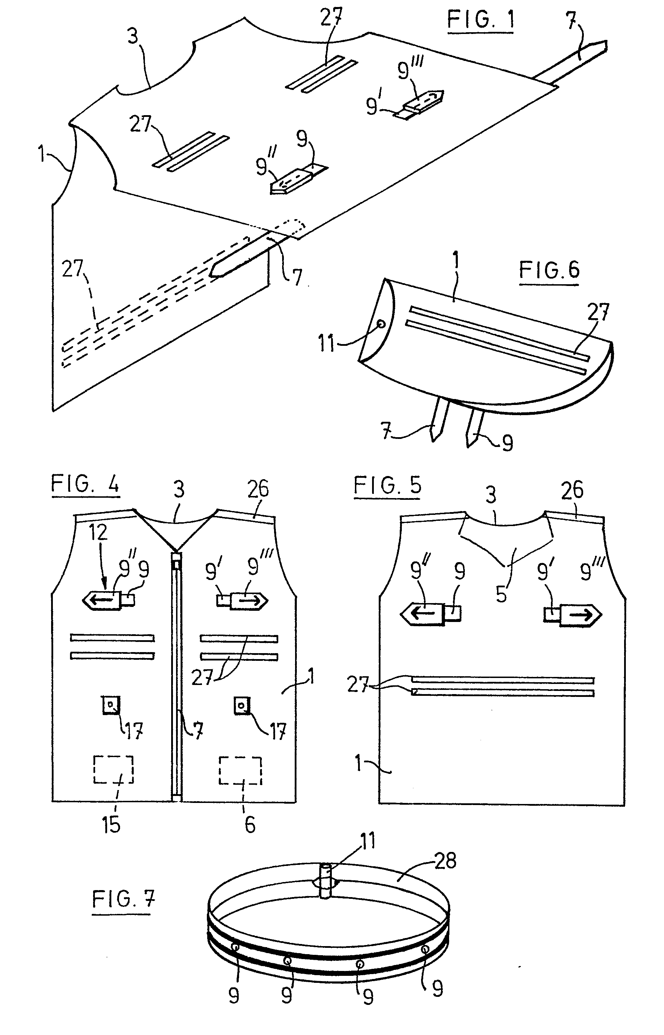

Comme illustrée à la figure 1, une forme de réalisation particulière du vêtement de sécurité routière, ayant l'aspect extérieur d'une veste de sport ample à la taille 2 et présentant une encolure 3, éventuellement des emmanchures 4, un capuchon 5, des poches 6, une fermeture éclair 7 à l'avant ou des boutons-pression . Le vêtement 1 comporte un dispositif de signalisation, désigné dans son ensemble par la notation de référence 8 comprenant des lampes ou feux 9, connectés à un circuit électrique 10 alimenté par une source de tension électrique 11 constituée par exemple de piles sèches, de batteries d'accumulation ou d'un générateur magnéto-électrique.

Le circuit électrique 10 susdit peut être tout simplement raccordé au circuit électrique du vélo ou du vélomoteur à l'aide d'éléments de raccordement prévus à cet effet.

Les conducteurs 12 du circuit électrique 10 sont montés dans des gaines 13, ménagées le long des coutures latérales du vêtement 1. Ces gaines 13 sont réalisées de préférence en tissu imperméable. Elles sont soudées ou cousues le long desdites coutures.

Les fils conducteurs sont fixés à des circuits imprimés ou aux bornes des soquets des lampes 9 et relient ceux-ci à la source de courant 11 qui est pourvue avantageusement d'un dispositif clignotant 14. La source de courant 11 est mise en place dans au moins une pochette 15, éventuellement jumelée à d'autres, prévues dans le vêtement 1. Les porte-lampes ou soquets des feux de position (9, 9') et de direction (9'', 9''') du dispositif d'éclairage sont montés sur le vêtement à l'avant (9, 9') et à l'arrière (9'', 9'''),

à gauche et à droite, à mi-hauteur des épaules ou à mi-hauteur des deltoïdes. Des petites fenêtres 16, ménagées dans le vêtement et recouvertes d'une plaque de mica bombée ou de matière plastique translucide offrent le libre passage aux rayons lumineux produits par les lampes 9 ou toute autre source de lumière. Ces plaques sont vissées ou collées, ou cousues, et sont de couleur blanche ou jaune à l'avant et jaune, orange ou rouge à l'arrière, conformément aux normes usuelles établies en matière de circulation.

Les interrupteurs de direction 17 ou boutons de commande à poussoir ou digital sont placés à l'avant, soit du côté gauche ou du côté droit ou des deux côtés de la partie inférieure du vêtement 1 ou à l'extrémité des manches à hauteur des mains. Un interrupteur général 18 permet d'enclencher et de déclencher l'ensemble du dispositif d'éclairage. Les interrupteurs 17, 18 sont éventuellement cachés par une pochet à volet 19 de manière à pouvoir être activé par une simple pression sur le volet.

Le circuit électrique montré à la figure 2 est composé, outre les fils conducteurs de courant 12, d'un circuit imprimé 20, d'ampoules 6 ou 12 V (0,30 mmA, 0,50 mmA, maximum 0,1 mmA), de piles 11 ou accus 12 V, du dispositif clignotant désigné dans son ensemble par la notation de référence 21 composé d'une résistance 470 Ohm 21, de deux transistors $T_1$, $T_2$ BC 212, 24, de deux condensateurs électrolytiques 47 µF 16/25 V 25 montés sur un circuit imprimé 20, par exemple Kemo époxy CA 55 x 27 mm. Le dispositif clignotant 21 peut être monté sur le circuit imprimé 20 sur lequel sont montées les lampes (figure 3). Contrairement à d'autres dispositifs analogues, il offre l'avantage de ne consommer que très peu d'énergie électrique.

La fonction du dispositif d'éclairage consiste essentiellement à signaler la présence sur la voie publique de l'usager et à indiquer clairement et visiblement les manoeuvres de celui-ci, à mieux se faire voir et être vu.

Cette veste se distingue par la multitude de ses applications et de son usage.

La coupe et l'allure générale du vêtement sont illustrées dans leurs grandes lignes aux figures 3 et 4. Celles-ci représentent une veste comprenant deux feux 9 pouvant clignoter, deux interrupteurs 17 destinés à actionner les feux de droite ou de gauche.

Le vêtement présente des épaulettes renforcées 26 et des coudes anti-chocs non montrés et des motifs réfléchissants 27 apposés horizontalement sur la partie frontale et dorsale du vêtement. La coupe du vêtement 1 qui, dans une forme particulière, est une tunique à larges emmanchures 4, permet aux enfants de porter un cartable sur le dos. Le pan arrière du vêtement se rabat alors sur le cartable de manière à être visible de l'arrière.

L'invention concerne également une veste destinée aux animaux, montrée à la figure 5. Ce vêtement porte une encolure, faite à la taille de l'animal, sur laquelle le dispositif lumineux est installé. Les piles ou les accus se logent dans une pochette à l'intérieur de la veste. La fermeture de cette veste se fait par des attaches 2, des boutons - pression ou des boutonnières.

Le collier 28, montré à la figure 6, réalisé en matière synthétique ou en cuir, est présenté avec des motifs réfléchissants 27 cousus ou collés et avec un système de fermeture à crochet ou boucle. Il comporte un circuit électrique composé d'une ou de plusieurs lampes, d'un interrupteur et des fils de raccordement reliés à une pile ou plusieurs piles sèches 11 placés du côté intérieur ou extérieur du collier 28.

Le vêtement peut être constitué d'une pièce vestimentaire qu'on enfile au-dessus des autres vêtements. Il peut être constitué d'une veste, d'un manteau, d'une cape, d'une pélerine, d'une capote ou d'un caban.

Il est à noter que la veste peut être livrée avec un petit sac d'emballage en tissu imperméable avec deux cordons pour le port à la ceinture lors de la non-utilisation.

Il est évident que la présente invention n'est pas limitée aux formes de réalisation décrites ci-dessus et que de nombreuses modifications peuvent être apportées à ces dernières, sans pour autant sortir du cadre de l'invention.

Ainsi, les interrupteurs 17 peuvent être des interrupteurs digitaux ou encore des interrupteurs magnétiques montés sur le circuit imprimé 20.

REVENDICATIONS

1. Vêtement de sécurité routière, à porter par-dessus les autres vêtements, en matière éventuellement imperméable et muni éventuellement de motifs réfléchissants, caractérisé en ce qu'il comporte un dispositif électrique de signalisation (8) comprenant des feux (9) et un circuit électrique (10) reliant ceux-ci à des moyens de commande (17) et à une source de courant (11).

2. Vêtement selon la revendication 1, caractérisé en ce que les feux susdits sont des feux de direction (9",9"') éventuellement clignotants et commandés manuellement par l'usager à l'aide des moyens de commande susdits.

3. Vêtement selon l'une quelconque des revendications 1 et 2, caractérisé en ce qu'il comporte des feux de position (9, 9').

4. Vêtement selon l'une quelconque des revendications précédentes, caractérisé en ce que les moyens de commande sont constitués d'interrupteurs magnétiques (17).

5. Vêtement selon la revendication 4, caractérisé en ce que lesdits interrupteurs sont cachés par une poche à volet (19) de manière à pouvoir être activé par une simple pression sur la bande de tissu.

6. Vêtement selon l'une quelconque des revendications précédentes, caractérisé en ce que les sources lumineuses sont disposées derrière des fenêtres translucides (16) aménagées dans le vêtement au voisinage de chaque épaule.

7.    Vêtement selon l'une quelconque des revendications précédentes, caractérisé en ce que les conducteurs (12) du circuit électrique (10) sont montés dans des  gaines (13), ménagées le long des coutures latérales du vêtement (1).

8.    Vêtement selon l'une quelconque des revendications précédentes, caractérisé en ce qu'il est constitué d'une veste, d'un manteau , d'une cape, d'une pélerine, d'une capote ou d'un caban.

0115478

FIG. 1

FIG. 6

FIG. 4

FIG. 5

FIG. 7

FIG. 2

FIG. 3

Office européen
des brevets

**RAPPORT DE RECHERCHE EUROPEENNE**

**0115478**
Numéro de la demande

EP 84 87 0007

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int. Cl. ³) |
|---|---|---|---|
| X | BE-A- 571 147 (A. LHOIR)<br><br>* En entier * | 1,2,6, 8 | G 08 B 5/38<br>A 41 D 13/00<br>G 08 B 5/00 |
| A | | 7 | |
| X | FR-A-2 280 156 (B. EXEHIAN)<br>* En entier * | 1,3,8 | |
| X | FR-A-2 520 597 (J.J. DRAY)<br><br>* Page 2; pages 3,4; revendications 1,2,5,7 * | 1,3,7, 8 | |
| A | | 5 | |
| X | FR-A-1 388 745 (L. KLOTZ)<br><br>* En entier * | 1-3,6, 8 | |
| X | FR-A-1 522 294 (PH. ALTARE)<br>* En entier * | 1-3 | |
| A | BE-A- 891 575 (M. CUVELIER)<br>* Page 5, lignes 21-28; page 14, lignes 10-25; page 22, revendication 43 * | 4 | |

**DOMAINES TECHNIQUES RECHERCHES (Int. Cl. ³)**

A 41 D
G 08 B

Le présent rapport de recherche a été établi pour toutes les revendications

| Lieu de la recherche<br>LA HAYE | Date d'achèvement de la recherche<br>23-03-1984 | Examinateur<br>GARNIER F.M.A.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

OEB Form 1503 03 82